(19) Europäisches Patentamt
European Patent Office
Office européen des brevets

(11) **EP 4 685 939 A1**

(12) **EUROPEAN PATENT APPLICATION**

(43) Date of publication:
**28.01.2026 Bulletin 2026/05**

(21) Application number: **25187931.8**

(22) Date of filing: **07.07.2025**

(51) International Patent Classification (IPC):
**H01M 50/107** (2021.01)    **H01M 50/152** (2021.01)
**H01M 50/159** (2021.01)

(52) Cooperative Patent Classification (CPC):
**H01M 50/107; H01M 50/152; H01M 50/159**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **22.07.2024 KR 20240096211**

(71) Applicant: **SK On Co., Ltd.**
**Seoul 03161 (KR)**

(72) Inventors:
 • **LEE, Yong Seok**
  **34124 Daejeon (KR)**
 • **KIM, Byung Mook**
  **34124 Daejeon (KR)**

 • **NAM, Hai Sol**
  **34124 Daejeon (KR)**
 • **RHO, Mi So**
  **34124 Daejeon (KR)**
 • **PARK, Kyung Tae**
  **34124 Daejeon (KR)**
 • **PARK, Byeong Hyeon**
  **34124 Daejeon (KR)**
 • **PARK, Jong Hun**
  **34124 Daejeon (KR)**
 • **LEE, Hye Ryeon**
  **34124 Daejeon (KR)**
 • **HUR, Yoo Jung**
  **34124 Daejeon (KR)**

(74) Representative: **Prüfer & Partner mbB**
**Patentanwälte · Rechtsanwälte**
**Sohnckestraße 12**
**81479 München (DE)**

(54) **BATTERY CELL**

(57)    The present disclosure relates to a battery cell. A battery cell according to an embodiment includes a case including a sidewall portion having a cylindrical shape and including a receiving space, and an opening provided at one end of the sidewall portion, an electrode assembly received in the receiving space, and a cap plate covering the opening, in which the case includes a first material, the cap plate includes a second material, and a melting point of the second material is lower than a melting point of the first material.

FIG. 1

**Description**

BACKGROUND OF THE INVENTION

1. Field

The present disclosure relates to a battery cell.

2. Description of the Related Art

A secondary battery converts electrical energy into chemical energy and stores the chemical energy so that the secondary battery can be reused multiple times through charging and discharging. A plurality of secondary batteries may be grouped together to form a battery assembly so as to obtain desired output and performance. This battery assembly may include the plurality of secondary batteries as described above, i.e., may include a plurality of battery cells in an internal receiving space.

Secondary batteries may be categorized into can-type secondary batteries and pouch-type secondary batteries based on the shape of the case. In addition, the can-type secondary batteries may be further categorized into cylindrical secondary batteries and prismatic secondary batteries based on the shape of the can (or the case).

When a thermal runaway event occurs in any one of the plurality of battery cells housed in the battery assembly due to an internal ignition, heat or flame generated by the corresponding cell may easily propagate to neighboring cells and lead to serious safety issues due to the nature of secondary batteries.

SUMMARY OF THE INVENTION

An aspect of the present disclosure is to provide a secondary battery with improved safety, particularly improved thermal runaway safety.

Another aspect of the present disclosure is to provide a secondary battery with a more efficient configuration.

Meanwhile, the present disclosure may be widely applied in the fields of electric vehicles, battery charging stations, energy storage systems (ESS), and other green technologies such as photovoltaics and wind power using batteries. In addition, the present disclosure may be used in eco-friendly mobility, including electric vehicles and hybrid vehicles, to prevent climate change by suppressing air pollution and greenhouse fluid emissions.

A battery cell according to embodiments of the present disclosure may include a case including a sidewall portion having a cylindrical shape and including a receiving space, and an opening provided at one end of the sidewall portion, an electrode assembly received in the receiving space, and a cap plate covering the opening, in which the case includes a first material, the cap plate includes a second material, and a melting point of the second material is lower than a melting point of the first material.

The cap plate may cover 90% to 100% of an area of the opening.

The cap plate may include the second material.

The melting point of the second material may be 10% to 80% of the melting point of the first material.

The melting point of the second material may be 10% to 50% of the melting point of the first material.

The melting point of the second material may be 1100 °C or less.

The melting point of the second material may be 700 °C or less.

The first material may include iron.

The second material may include at least one of copper, aluminum, gold, silver, lead, zinc, tin, antimony, and alloys thereof.

The second material may include at least one of copper and aluminum.

The second material may be aluminum.

The case may further include a closed end formed at an other end of the sidewall portion, and the closed end portion may include the first material.

The battery cell may further include an electrode terminal passing through the closed end portion, and the electrode terminal may include the first material.

BRIEF DESCRIPTION OF THE DRAWINGS

FIG. 1 is an exploded view of an example of a battery cell in one direction according to one embodiment of the present disclosure.

FIG. 2 is a structural diagram of an example of a battery cell in one direction according to one embodiment of the present disclosure.

FIG. 3 is a structural view of an example of a battery cell in a different direction according to one embodiment of the present disclosure.

FIG. 4 is a view showing a rupture in a sidewall portion of a battery cell.

DETAILED DESCRIPTION

It is to be understood that the embodiments described herein may be subject to various modifications, and the technical features according to one embodiment are not limited to the embodiments described below. Furthermore, throughout the disclosure, unless otherwise particularly stated, the word "comprise", "include", "contain", or "have" does not mean the exclusion of any other constituent element, but means further inclusion of other constituent elements, and elements, materials, or processes which are not further listed are not excluded.

Being equal or uniform in this specification may mean being equal or uniform to each other within an acceptable margin of error unless otherwise specified. For example, the fact that certain components or physical property measurement values are the same may include the meaning that the two objects to be compared are not only completely the same, but also the same within the error range. On the other hand, the fact that certain physical property measurement values are the same may mean that the difference in measurement values between objects is approximately less than 5%, specifically less than 3%, and more specifically less than 1%.

In this specification, that the angles formed by the two objects are perpendicular or parallel or parallel to each other may include not only being geometrically perpendicular or parallel, but also being within a slight error range.

The numerical range used in the present disclosure comprises all values within the range comprising the lower limit and the upper limit, increments logically derived in a form and spanning in a defined range, all double limited values, and all possible combinations of the upper limit and the lower limit in the numerical range defined in different forms.

Unless otherwise defined herein, "approximately" or "about" may be considered a value within 30%, 25%, 20%, 15%, 10%, or 5% of the stated value.

In this specification, "electrically connected" may mean, without limitation, any connection method by which a plurality of objects may be connected to each other so as to be in electrical communication with each other.

The use of terms such as 'first, second, and third' in front of the components mentioned below is only to avoid confusion about the components to which they are referred and is irrelevant to the order, importance, or master-slave relationship between the components, etc. For example, an embodiment that includes only a second component without a first component may also be implemented.

A configuration defined herein as a "part," a "portion," or a "module" may mean a unit that processes at least one function or operation, and may be implemented in hardware or software, or a combination of hardware and software.

As used herein, "arranged" may mean, without limitation, a positional relationship by which one object may be positioned adjacent to another object. By way of a non-limiting example, it may mean coating one object with another object, adhering one object to another object via an adhesive material, fusing one object to another by applying heat, pressure, or the like, or simply positioning at least a portion of one object within any space to abut at least a portion of another object.

In this specification, when it is stated that one object "covers" another object, this means that one object is positioned adjacent to another object in such a way that it can block or mitigate any external factors that may affect the other object or a third object, without limitation, in terms of functional or structural relationships. Alternatively, it may mean that one object is positioned adjacent to a third object such that the first object and the third object together can block or mitigate any external factors that could be imposed on another object, without limitation.

As used herein, the term "secondary battery" may refer to a battery that generates electrical energy by oxidation and reduction reactions when ions, more specifically, cations such as lithium ions are inserted into and extracted from a cathode and an anode. More specifically, as used herein, the term "secondary battery" may refer to, but is not necessarily limited to, a lithium-ion secondary battery.

As used herein, the term "battery cell" may refer to a basic unit of a secondary battery capable of charging and discharging electrical energy.

Hereinafter, the present disclosure will be described in detail. However, this is by way of example only and the disclosure is not limited to the specific embodiments described.

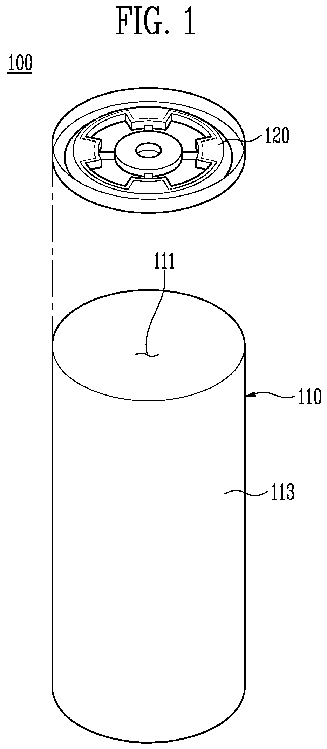

FIG. 1 is an exploded view of an example of a battery cell 100 in one direction according to one embodiment of the present disclosure.

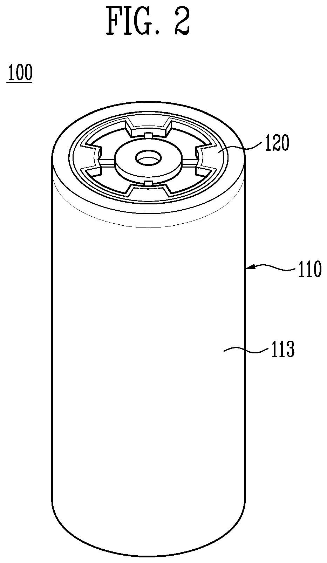

FIG. 2 is a structural diagram of the example of the battery cell 100 in one direction according to one embodiment of the present disclosure.

The battery cell 100 according to one embodiment of the present disclosure may include a case 110 having a cylindrical sidewall portion 113 with a receiving space therein and an opening 111 provided at one end of the sidewall portion 113; an electrode assembly received in the receiving space; and a cap plate 120 covering the opening 111. The case 110 includes a first material and the cap plate 120 includes a second material. A melting point of the second material may be lower than that of the first material.

In one embodiment, the case 110 may include the cylindrical sidewall portion 113 having the receiving space therein and the opening 111 provided at one end of the sidewall portion 113. Further, the case 110 may further include a closed end portion 112 formed at the other end of the sidewall portion 113 to be described below.

In one embodiment, the sidewall portion 113 may have a cylindrical shape. In a specific embodiment, the sidewall portion 113 may have in a cylindrical shape with an internal receiving space therein. The sidewall portion 113 may receive the electrode assembly in the internal receiving space.

As shown in FIGS. 1 and 2, the battery cell 100 according to one embodiment of the present disclosure may be a cylindrical, can type secondary battery, but is not necessarily limited thereto.

Referring to FIG. 1, in one embodiment, the opening 111 may be provided at one end of the sidewall portion 113. The one end may refer to either of both ends of the sidewall portion 113 having the cylindrical shape when viewed relative to the direction of extension of the sidewall portion 113.

In one embodiment, the opening 111 may be in communication with the receiving space. Thus, the electrode assembly may be received in the case 110 through the opening 111. In one embodiment, the opening 111 may be covered and sealed by the cap plate 120 to be described below. When the opening 111 is covered by the cap plate 120, the receiving space may be sealed from the outside by the sidewall portion 113, the closed end portion 112, and the cap plate 120.

In one embodiment, the opening 111 may be a circular, oval, or oblong planar space communicating with the receiving space and coming into contact with the one end.

In one embodiment, the closed end portion 112 may be formed at the other end of the sidewall portion 113. In a specific embodiment, the closed end portion 112 may be formed at the other end of the sidewall portion 113 in a direction perpendicular to the extension direction of the sidewall portion 113 so as to seal the other end of the sidewall portion 113. The other end may refer to the other end of both ends of the sidewall portion 113 having the cylindrical shape, except for the one end, on the basis of the extension direction of the sidewall portion 113.

In one embodiment, the closed end portion 112 may extend from the other end of the sidewall portion 113. That is, the closed end portion 112 may be integrally formed with the sidewall portion 113.

Alternatively, in one embodiment, the closed end portion 112 may be formed at the other end of the sidewall portion 113 and may be formed separately from the sidewall portion 113. In this embodiment, the closed end portion 112 may be detachable from the sidewall portion 113.

In one embodiment, the closed end portion 112 may define a cap assembly 135 along with an electrode terminal 131 and a gasket 132 to be described below, which will be described below.

Referring again to FIGS. 1 and 2, in one embodiment, the cap plate 120 may cover the opening 111. As described above, the opening 111 may be covered and sealed by the cap plate 120.

In one embodiment, the cap plate 120 may further include a filling portion for filling an electrolyte solution as needed, or a notching portion for venting gases.

In an exemplary embodiment, the cap plate 120 may be welded to the case 110. In an exemplary embodiment, the welding may be any welding method used to bond metallic materials to each other.

In an exemplary embodiment, the cap plate 120 may be bead-bonded to the case 110. In an exemplary embodiment, the beading bonding may be performed by beading at least a portion of an area including the one end adjacent the opening 111 in the sidewall portion 113 along the circumference of the sidewall portion 113, arranging the cap plate 120 over the beaded region so that the cap plate 120 may cover the opening 111, and crimping the area including the one end in the sidewall portion 113. However, the present disclosure is not necessarily limited thereto.

In one embodiment, the case 110 may include a first material and the cap plate 120 includes a second material, and a melting point of the second material may be lower than that of the first material.

In one embodiment, the case 110 may further include the closed end portion 112 formed at the other end of the sidewall portion 113, and the closed end portion 112 may include the first material.

In a specific embodiment, the case 110 and the closed end portion 112 may include a first material, and the cap plate 120 may include a second material. In other words, the case 110 and the closed end portion 112 may include the same material, and the same material may be the first material. The cap plate 120 may include a material different from that of the case 110, and the material of the cap plate 120 may be the second material.

As described above, in the battery cell 100 according to one embodiment of the present disclosure, the receiving space may be formed as the cylindrical shaped space. Accordingly, in the battery cell 100 according to one embodiment of the present disclosure, only one surface of the receiving space covered by the cap plate 120 may be covered by the second material having the relatively low melting point, while the remaining sides covered by the case 110 may be covered by the first material having the relatively high melting point. Accordingly, when heat or flame is generated in the battery cell 100 according to one embodiment of the present disclosure due to, such as ignition or the like, the heat or the flame may be ejected to the outside of the battery cell 100 only towards the opening 111 covered by the cap plate 120 including the second material having the relatively low melting point, which will be described below in more detail.

In one embodiment, the cap plate 120 may cover 90% to 100% of the area of the opening 111. In a specific embodiment, the cap plate 120 may cover 95% to 100% of the area of the opening 111. In an exemplary embodiment, the cap plate 120 may cover substantially the entire area of the opening 111. Below the numerical range, particularly when the cap plate 120 has a less than 90% coverage area, it may be difficult to focus a path of heat or flame into the opening 111.

In one embodiment, the cap plate 120 may include the second material. In other words, the cap plate 120 may include only the second material having the relatively low melting point.

In one embodiment, the melting point of the second material may be 10% to 80% of the melting point of the first material.

As for the configuration in which the melting point of the second material may be lower than the melting point of the first material, it is as described above. In this configuration, the melting point of the second material may be 10% to 80% of the melting point of the first material.

In other words, the melting point $T_m^1(°C)$ of the first material and the melting point $T_m^2(°C)$ of the second material may satisfy the relational expression defined by Relational Expression 1-1 below.

[Relational Expression 1-1]

$$0.10\ T_m^1 \le T_m^2 \le 0.80\ T_m^1$$

In one embodiment, the melting point of the second material may be 10% to 75% of the melting point of the first material. In other words, the melting point $T_m^1(°C)$ of the first material and the melting point $T_m^2(°C)$ of the second material may satisfy the relational expression defined by Relational Expression 1-2 below.

[Relational Expression 1-2]

$$0.10\ T_m^1 \le T_m^2 \le 0.75\ T_m^1$$

In one embodiment, the melting point of the second material may be 10% to 50% of the melting point of the first material. In other words, the melting point $T_m^1(°C)$ of the first material and the melting point $T_m^2(°C)$ of the second material may satisfy the relational expression defined by Relational Expression 1-3 below.

[Relational Expression 1-3]

$$0.10\ T_m^1 \le T_m^2 \le 0.50\ T_m^1$$

In one embodiment, the melting point of the second material may be 10% to 45% of the melting point of the first material. In other words, the melting point $T_m^1(°C)$ of the first material and the melting point $T_m^2(°C)$ of the second material may satisfy the relational expression defined by Relational Expressions 1-4 below.

[Relational Expression 1-4]

$$0.10\ T_m^1 \le T_m^2 \le 0.45\ T_m^1$$

When the melting points of the first material and the second material satisfy the numerical ranges as described above, heat or flame generated by factors such as ignition in the battery cell 100 may be more intensively ejected to the outside of the battery cell 100 through the opening 111.

In one embodiment, the melting point of the first material may be 1400 °C or greater. In one embodiment, the melting point of the first material may be 1500 °C or greater. That is, the melting point $T_m^1$ of the first material may satisfy the relationship $T_m^1(°C) \ge 1400$. Alternatively, the melting point $T_m^1$ of the first material may satisfy the relationship of $T_m^1(°C) \ge 1500$.

In one embodiment, the second material may have a melting point of 1100 °C or less. In a specific embodiment, the melting point of the second material may be 1000 °C or less. In a further specific embodiment, the melting point of the second material may be 900 °C or less. In a further specific embodiment, the second material may have a melting point of 800 °C or less. In a further specific embodiment, the melting point of the second material may be 700 °C or less. In a further specific embodiment, the melting point of the second material may be 660 °C or less (rounded to the nearest decimal point).

In other words, the melting point $T_m^2$ of the second material may satisfy the relationship $T_m^2(°C) \leq 1100$, more specifically $T_m^2(°C) \leq 1000$, more specifically $T_m^2(°C) \leq 900$, more specifically, $T_m^2(°C) \leq 800$, more specifically, $T_m^2(°C) \leq 700$, and more specifically, $T_m^2(°C) \leq 660$ (rounded to the nearest decimal point).

When the melting points of the first material and the second material satisfy the numerical ranges as described above, the required rigidity of the battery cell 100 as the exterior material can be met, and at the same time, heat or flame generated by factors such as ignition in the battery cell 100 may be more intensively ejected to the outside of the battery cell 100 through the opening 111.

In one embodiment, the first material may include iron.

In one embodiment, the first material may include a carbon steel material.

The first material may be a material which is further subjected to plating or the like.

In one embodiment, the second material may include at least one of copper, aluminum, gold, silver, lead, zinc, tin, antimony, and alloys thereof.

In a specific embodiment, the second material may include at least one of copper and aluminum.

In a specific embodiment, the second material may include aluminum. In a specific embodiment, the second material may be aluminum. In a specific embodiment, the second material may be aluminum which is plated to prevent corrosion.

In one embodiment, the electrode assembly may be received in a receiving space of the case 110. In a specific embodiment, the electrode assembly may be wound in a rolled form and received in the receiving space of the case 110.

In one embodiment, the electrode assembly may include a cathode, an anode and a separator. In a specific embodiment, the electrode assembly may be formed by stacking the cathode, the separator, and the anode in a sequential manner, and this stack may be wound in a roll form and received in the receiving space. The stack wound in the roll form may be referred to as a Jelly Roll. The roll form may have a circular cross-section, but is not necessarily limited thereto. That is, the roll form may have various shapes, including an oval shape, or an oblong shape.

According to an exemplary embodiment, the cathode may include a cathode collector and a cathode active material applied to at least one surface of the cathode collector. The cathode collector may include a conductive material known in the art to the extent that the cathode collector may not cause a chemical reaction in the lithium secondary battery. The cathode collector may include, for example, any one of stainless steel, nickel (Ni), aluminum (Al), titanium (Ti), copper (Cu), and alloys thereof, and may be provided in various forms, such as film, sheet, foil, and the like. The cathode active material may include a material in which lithium ions are inserted and extracted. The cathode active material may be, for example, a lithium metal oxide.

According to an exemplary embodiment, the anode may include an anode collector and an anode active material applied to at least one surface of the anode collector. The anode collector may include a conductive material known in the art to the extent that the anode collector may not cause a chemical reaction in the lithium secondary battery. The anode active material may include, for example, any one of stainless steel, nickel (Ni), aluminum (Al), titanium (Ti), copper (Cu), and alloys thereof, and may be provided in various forms, such as film, sheet, foil, and the like. The anode active material may include a material in which lithium ions may be inserted and extracted. The anode active material may include, for example, any one of a carbon-based material such as crystalline carbon, amorphous carbon, carbon composite, carbon fiber, a lithium alloy, silicon (Si) and tin (Sn), or a combination thereof.

According to an exemplary embodiment, each of the cathode and the anode may further include a binder and a conductive material for enhancement of mechanical stability and electrical conductivity.

According to an exemplary embodiment, the separator may be included to prevent an electrical short between the anode and the cathode and allow the flow of ions to occur. The separator may include, for example, a porous polymeric film or a porous nonwoven fabric.

According to an exemplary embodiment, the electrode assembly may be immersed in an electrolyte solution in the case 110. The electrolyte solution may be a non-aqueous electrolyte solution. The electrolyte solution may include a lithium salt and an organic solvent, and may further include additives as desired.

According to an exemplary embodiment, the cathode and the anode may include uncoated portions (an anode uncoated portion and a cathode uncoated portion) in which no active material is applied to the collectors. According to an exemplary embodiment, the anode uncoated portion and the cathode uncoated portion may be independently withdrawn in a direction toward the opening 111 and the closed end portion 112, respectively. In an exemplary embodiment, the anode uncoated portion and the cathode uncoated portion may be withdrawn simultaneously in either of the directions facing the opening 111 and facing the closed end portion 112.

According to an exemplary embodiment, the electrode assembly may be wound in the form of a roll, but with a cavity formed along the center of the roll . The cavity may be formed in a cylindrical shape. The cavity may function as a passageway for an electrolyte solution to be injected during the manufacturing process of the battery cell 100. The cavity may be formed as a pathway connecting a center of the cap plate 120 and a center of the closed end portion 112.

According to an exemplary embodiment, the battery cell 100 may further include at least one or both of an anode collector plate and a cathode collector plate in the receiving space. The anode collector plate and the cathode collector plate may be electrically connected to an anode and a cathode, respectively. According to an exemplary embodiment, the cathode collector plate and the anode collector plate may include a metallic material, such as, but are not necessarily limited to, aluminum, copper, gold, silver, and the like.

According to an exemplary embodiment, the anode collector plate and the cathode collector plate may be electrically connected to the anode and the cathode via an anode lead and a cathode lead, respectively. Alternatively, the cathode collector plate and the anode collector plate may be electrically connected directly to the cathode uncoated portion and the anode uncoated portion by welding or the like. Such a structure may be referred to as a tabless structure. Alternatively, the battery cell 100 may include only the anode collector plate without the cathode collector plate.

According to exemplary embodiments, the cathode collector plate and the anode collector plate may be electrically connected to the case 110 and/or the electrode terminal 131 to be described below so as to electrically communicate with the outside.

According to an exemplary embodiment, the battery cell 100 may further include an insulating member to prevent an electrical short between components in the receiving space. The insulating member may be provided in the form of an insulating pad, a gasket, or the like in the receiving space.

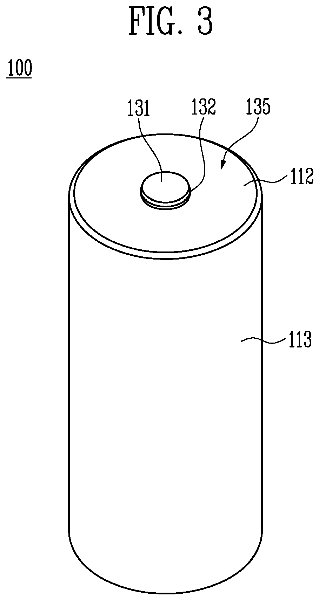

FIG. 3 is a structural view of an example of the battery cell 100 in a different direction according to one embodiment of the present disclosure.

Referring to FIG. 3, in one embodiment, the battery cell 100 further includes the electrode terminal 131 passing through the closed end portion 112, and the electrode terminal 131 may include the first material.

As described above, the closed end portion 112 may define the cap assembly 135, together with the electrode terminal 131 and the gasket 132.

According to an exemplary embodiment, the electrode terminal 131 has an approximately "H"-shaped cross-sectional shape and penetrates the closed end portion 112. In addition, one end of the electrode terminal 131 may be located in the receiving space and the other end thereof may protrude from outside the receiving space in the direction of extension of the case 110.

According to an exemplary embodiment, the electrode terminal 131 may be electrically connected to at least one of the electrodes (the cathode and the anode). According to an exemplary embodiment, the electrode terminal 131 may be directly connected to at least one of the electrode collectors (the cathode current collector and the anode current collector), or may be connected via a separate connection member. The electrode may be the cathode, but is not necessarily limited thereto.

According to an exemplary embodiment, the above configuration allows the electrode terminal 131 to function as an external terminal.

In one embodiment, the electrode terminal 131 may include the first material. Descriptions relating to the melting point or the first material are the same as above. Thus, redundant descriptions will be omitted hereinafter.

In one embodiment, the case 110, the closed end portion 112, and the electrode terminal 131 may include the first material, and the cap plate 120 may include the second material. That is, the case 110, the closed end portion 112, and the electrode terminal 131 may include the same material, and the same material may be the first material. The cap plate 120 may include a material different from that of the case 110, and the material of the cap plate 120 may be the second material.

As described above, in the battery cell 100 according to one embodiment of the present disclosure, the receiving space may be formed as a cylindrical shaped space. Accordingly, in the battery cell 100 according to one embodiment of the present disclosure, only one surface of the receiving space covered by the cap plate 120 may be covered by the second material having the relatively low melting point, while the remaining surfaces covered by the case 110 may be covered by the first material having the relatively high melting point. Accordingly, when heat or flame is generated in the battery cell 100 according to one embodiment of the present disclosure due to, such as ignition or the like, the heat or the flame may be ejected outside the battery cell 100 only toward the opening 111 covered by the cap plate 120 including the second material having the relatively low melting point.

According to an exemplary embodiment, the gasket 132 may be electrically insulating and be interposed between the electrode terminal 131 and the closed end portion 112 at a portion where the electrode terminal 131 and the closed end portion 112 are coupled to each other so as to maintain the electrical isolation of the electrode terminal 131 and the closed end portion 112.

In one embodiment, the battery cell 100 may have a cylindrical form factor such as 18650, 21700, 26650, 32700, 32140, 46110, 4680, 4695, 48110, 4875, 4880, or the like. In a specific embodiment, the form factor may be 46110, 4680, 4695, 48110, 4875, 4880, or the like. In a more specific embodiment, the form factor of the battery cell 100 may be, but is not necessarily limited to, 4680 with a diameter of approximately 46 mm and a height of approximately 80 mm.

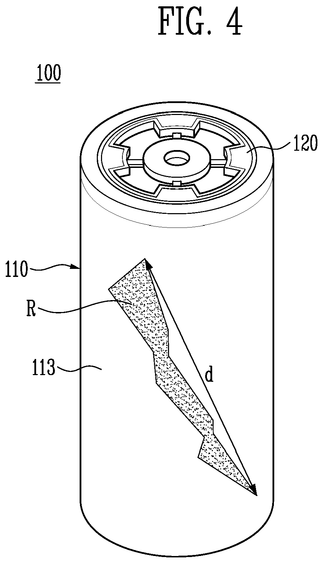

FIG. 4 is a view showing a rupture occurring in the sidewall portion 113 of the battery cell 100.

As described above, the internal receiving space of the battery cell 100 according to one embodiment of the present disclosure may be sealed by the case 110 and the cap plate 120. This structure of the case 110 and the cap plate 120 may be collectively referred to as an exterior material. When heat or flame is generated due to, such as ignition, from the electrode assembly housed in the receiving space, this may cause internal pressure to be generated in the exterior material. When the internal pressure is generated beyond a predetermined or materially inherent pressure limit of the exterior material, a rupture may occur in at least a portion of the exterior material, and the heat or the flame may be ejected to the outside of the battery cell 100 through a space R in which the exterior material is ruptured.

The plurality of battery cells 100 may be arranged such that the sidewall portions 113 thereof may be adjacent to each other in the battery assembly. In other words, paths connecting the closed end portions 112 and the openings 111 are all parallel.

Referring to FIG. 4, the rupture may occur on the sidewall portion 113 of the exterior material of the battery assembly. When the rupture occurs as described above, the heat or the flame generated in the battery cell 100 may be ejected toward the sidewall portion 113 by the ruptured space R formed in the sidewall portion 113.

Considering the above-described arrangement of the plurality of battery cells 100 in the battery assembly, this type of rupture may cause direct heat propagation between the battery cells 100 in the battery assembly, which may eventually transition to a thermal runaway event.

In the battery cell 100 according to one embodiment of the present disclosure, when heat or flame is generated in the battery cell 100 due to, such as ignition or the like, as described above, the heat or the flame may be directed out of the battery cell 100 only towards the opening 111 covered by the cap plate 120 including the second material having the relatively low melting point. In other words, it is possible to prevent the ejection of the heat or the flame into a path toward neighboring battery cells 100, and it is also possible to direct the ejection of the heat or the flame from in the battery cells 100 into a specific path. As a result, even when an ignition event occurs in at least one battery cell 100 of the battery assembly, the propagation of the heat to a battery cell 100 adjacent to the battery cell 100 may be inhibited or delayed, thereby reducing the likelihood of a thermal runaway event occurring. In addition, the heat or the flame may be directed to a specific path, allowing for more efficient arrangement and configuration of other components in the battery assembly.

The battery cell 100 according to one embodiment of the present disclosure may be used as a battery cell to power a small device, but may also be preferably used as a unit cell in a battery module and/or battery pack of a medium to large device including a plurality of battery cells. Examples of the small devices may include, but are not limited to, cell phones, notebook computers, cameras, and the like. Examples of the medium to large devices may include, but are not limited to, electric vehicles, hybrid electric vehicles, plug-in hybrid electric vehicles, systems for power storage, and the like.

It is understood by those skilled in the art that the plurality of exemplary embodiments described above are specific examples of the following aspects.

Aspect 1: A battery cell, comprising: a case including a sidewall portion having a cylindrical shape and including a receiving space, and an opening provided at one end of the sidewall portion; an electrode assembly received in the receiving space; and a cap plate covering the opening, wherein the case comprises a first material, the cap plate comprises a second material, and a melting point of the second material is lower than a melting point of the first material.

Aspect 2: The battery cell according to Aspect 1, wherein the cap plate covers 90% to 100% of an area of the opening.

Aspect 3: The battery cell according to Aspects 1 or 2, wherein the cap plate comprises the second material.

Aspect 4: The battery cell according to any one of Aspects 1 to 3, wherein the melting point of the second material is 10% to 80% of the melting point of the first material.

Aspect 5: The battery cell according to any one of Aspects 1 to 4, wherein the melting point of the second material is 10% to 50% of the melting point of the first material.

Aspect 6: The battery cell according to any one of Aspects 1 to 5, wherein the melting point of the second material is 1100 °C or less.

Aspect 7: The battery cell according to Aspect 6, wherein the melting point of the second material is 700 °C or less.

Aspect 8: The battery cell according to any one of Aspects 1 to 7, wherein the first material comprises iron.

Aspect 9: The battery cell according to any one of Aspects 1 to 8, wherein the second material comprises at least one of copper, aluminum, gold, silver, lead, zinc, tin, antimony, and alloys thereof.

Aspect 10: The battery cell according to Aspect 9, wherein the second material comprises at least one of copper and aluminum.

Aspect 11: The battery cell according to Aspect 10, wherein the second material is aluminum.

Aspect 12: The battery cell according to any one of Aspects 1 to 11, wherein the case further comprises a closed end formed at an other end of the sidewall portion, and wherein the closed end portion comprises the first material.

Aspect 13: The battery cell according to Aspect 12, wherein the battery cell further comprises an electrode terminal passing through the closed end portion, and wherein the electrode terminal comprises the first material.

Hereinafter, embodiments of the present disclosure will be further described with reference to specific experimental examples. Inventive examples and comparative examples included in the experimental examples are only illustrative of the invention and are not intended to limit the scope of the appended patent claims, and it will be apparent to those skilled in the art which various changes and modifications to the embodiments are possible in the scope and spirit of the disclosure, and which such changes and modifications fall in the scope of the appended patent claims.

**Embodiments**

(Inventive Example 1)

A cylindrical battery cell with a steel case and an aluminum cap plate as an exterior material was prepared.

(Inventive Example 2)

A cylindrical battery cell with a steel case and a copper cap plate as an exterior material was prepared.

(Inventive Example 3)

A cylindrical battery cell with a steel case and a nickel cap plate as an exterior material was prepared.

(Comparative Example)

A cylindrical battery cell with a steel case and a tungsten cap plate as an exterior material was prepared.

**Evaluation Example**

Referring to the GB 38031 test, one of the battery safety tests, a thermal runaway situation was intentionally simulated by heating the battery cells of the Inventive Examples and the Comparative Example to over 300 °C. After 30 minutes of the thermal runaway, the battery cells of the Inventive Examples and the Comparative Example were evaluated to determine where a rupture as shown in FIG. 4 occurred in the sidewall portion. When the rupture occurred, a straight-line distance (d) between the upper and lower ends of the ruptured space (R) was measured and stated in Table 1 below. When no rupture occurred, an X was recorded.

[Table 1]

|  | $T_m{}^1$(°C) | $T_m{}^2$(°C) | $T_m{}^2/T_m{}^1$ | d (mm) |
|---|---|---|---|---|
| **Inventive Example 1** | 1,538 | 660 | 0.429 | X |
| **Inventive Example 2** | 1,538 | 1,083 | 0.704 | 20 |
| **Inventive Example 3** | 1,538 | 1,455 | 0.946 | 70 |
| **Comparative example** | 1,538 | 3,422 | 2.225 | 90 |

.In Table 1 above, $T_m{}^1$ is the melting point of the case material, $T_m{}^2$ is the melting point of the cap plate material, and d is the straight-line distance connecting the upper and lower ends of the ruptured space as shown in FIG. 4.

As shown in Table 1 above, the battery cell of the Comparative Example experienced the significant rupture in the sidewall portion when the internal cell ignition was made according to the evaluation method.

In contrast, the battery cells of Inventive Examples 1 to 3, where the melting point of the second material was lower than the melting point of the first material, each showed a lower degree of rupture than the Comparative Example.

In particular, Inventive Examples 1 and 2, where the melting point of the second material was 80% or less and 75% or less, more particularly 50% or less and 45% or less, of the melting point of the first material did not experience any rupture on the sidewall portions, or only a small-size rupture occurred in the sidewall portions. This is due to the fact that the heat and/or the flame generated by the internal cell ignition was preemptively directed mostly towards the cap plate.

According to one aspect of the present disclosure, a secondary battery with improved safety, particularly improved thermal runaway safety, may be provided.

According to another aspect of the present disclosure, a secondary battery with a more efficient configuration may be provided.

Meanwhile, the battery cell according to the present disclosure can be widely applied to electric vehicles, battery charging stations, energy storage systems (ESS), and other green technology fields such as photovoltaics and wind power using batteries. In addition, battery assemblies according to the present disclosure may be used in eco-friendly mobility and the like, including electric vehicles and hybrid vehicles, to prevent climate change by suppressing air pollution and greenhouse gas emissions.

The present disclosure may be modified and implemented in various forms, and its scope is not limited to the above-described embodiments. The content described above is merely an example of applying the principles of the present disclosure, and other features may be further included without departing from the scope of embodiments according to the present disclosure.

**Claims**

1. A battery cell, comprising:

   a case including a sidewall portion having a cylindrical shape and including a receiving space, and an opening provided at one end of the sidewall portion;
   an electrode assembly received in the receiving space; and
   a cap plate covering the opening,
   wherein the case comprises a first material, the cap plate comprises a second material, and a melting point of the second material is lower than a melting point of the first material.

2. The battery cell according to claim 1, wherein the cap plate covers 90% to 100% of an area of the opening.

3. The battery cell according to claims 1 or 2, wherein the cap plate comprises the second material.

4. The battery cell according to any one of claims 1 to 3, wherein the melting point of the second material is 10% to 80% of the melting point of the first material.

5. The battery cell according to any one of claims 1 to 4, wherein the melting point of the second material is 10% to 50% of the melting point of the first material.

6. The battery cell according to any one of claims 1 to 5, wherein the melting point of the second material is 1100 °C or less.

7. The battery cell according to claim 6, wherein the melting point of the second material is 700 °C or less.

8. The battery cell according to any one of claims 1 to 7, wherein the first material comprises iron.

9. The battery cell according to any one of claims 1 to 8, wherein the second material comprises at least one of copper, aluminum, gold, silver, lead, zinc, tin, antimony, and alloys thereof.

10. The battery cell according to claim 9, wherein the second material comprises at least one of copper and aluminum.

11. The battery cell according to claim 10, wherein the second material is aluminum.

12. The battery cell according to any one of claims 1 to 11, wherein the case further comprises a closed end formed at an other end of the sidewall portion, and
    wherein the closed end portion comprises the first material.

13. The battery cell according to claim 12, wherein the battery cell further comprises an electrode terminal passing through the closed end portion, and
    wherein the electrode terminal comprises the first material.

# FIG. 1

# FIG. 2

100

120

110

113

# FIG. 3

100

131  132  135

112

113

# FIG. 4

# EUROPEAN SEARCH REPORT

**Application Number**

EP 25 18 7931

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 138 166 A1 (JIANGSU CONTEMPORARY AMPEREX TECH LTD [CN]) 22 February 2023 (2023-02-22) * the whole document * ----- | 1-13 | INV. H01M50/107 H01M50/152 H01M50/159 |
| X | US 2016/104875 A1 (LEPORT FRANCISCO [US] ET AL) 14 April 2016 (2016-04-14) * the whole document * ----- | 1-13 | |

**TECHNICAL FIELDS SEARCHED (IPC)**

H01M

The present search report has been drawn up for all claims

| Place of search | Date of completion of the search | Examiner |
|---|---|---|
| Munich | 15 December 2025 | Swiatek, Ryszard |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 18 7931

This annex lists the patent family members relating to the patent documents cited in the above-mentioned European search report.
The members are as contained in the European Patent Office EDP file on
The European Patent Office is in no way liable for these particulars which are merely given for the purpose of information.

15-12-2025

| Patent document cited in search report | | Publication date | Patent family member(s) | | Publication date |
|---|---|---|---|---|---|
| EP 4138166 | A1 | 22-02-2023 | CN | 116888782 A | 13-10-2023 |
| | | | CN | 216120648 U | 22-03-2022 |
| | | | CN | 219040512 U | 16-05-2023 |
| | | | EP | 4138166 A1 | 22-02-2023 |
| | | | EP | 4300702 A1 | 03-01-2024 |
| | | | EP | 4429012 A2 | 11-09-2024 |
| | | | JP | 7610018 B2 | 07-01-2025 |
| | | | JP | 7617278 B2 | 17-01-2025 |
| | | | JP | 2024500394 A | 09-01-2024 |
| | | | JP | 2024505291 A | 05-02-2024 |
| | | | JP | 2025060917 A | 10-04-2025 |
| | | | KR | 20230107639 A | 17-07-2023 |
| | | | KR | 20230127330 A | 31-08-2023 |
| | | | US | 2023012207 A1 | 12-01-2023 |
| | | | US | 2024128604 A1 | 18-04-2024 |
| | | | WO | 2023279260 A1 | 12-01-2023 |
| | | | WO | 2023279574 A1 | 12-01-2023 |
| US 2016104875 | A1 | 14-04-2016 | US | 2013059181 A1 | 07-03-2013 |
| | | | US | 2016104875 A1 | 14-04-2016 |

EPO FORM P0459

For more details about this annex : see Official Journal of the European Patent Office, No. 12/82